# EUROPÄISCHE PATENTANMELDUNG

(11) **EP 2 357 121 A2**
(43) Veröffentlichungstag der Anmeldung: **17.08.2011**
(21) Anmeldenummer: 11150038.5
(22) Anmeldetag: 03.01.2011
(51) Int. Cl.: B62D 35/00, B62D 37/02

(54) **Luftleiteinrichtung mit Lenkereinheit für Toleranzausgleich**

(30) Priorität: 04.02.2010 DE 102010006776; 17.03.2010 DE 102010011676
(71) Anmelder: HS Genion GmbH, 82205 Gilching (DE)
(72) Erfinder: Wegener, Fritz, 82205, Gilching (DE); Biecker, Peter, 82041, Deisenhofen (DE)
(74) Vertreter: advotec.

(57) **Zusammenfassung**

Es wird eine Luftleiteinrichtung für ein Fahrzeug vorgeschlagen, umfassend mindestens ein Spoilerelement (12), das mittels einer Betätigungsmechanik (16) zwischen einer eingefahrenen Ruhestellung und einer ausgestellten Betriebsstellung verstellbar ist, wobei die Betätigungsmechanik (16) eine Lenkereinheit aufweist, die mindestens zwei Führungslenker (20,22), die eine verschwenkbare Mehrgelenkeinheit bilden und jeweils einerseits an einer Basis (18) und andererseits an einem Spoilerelementträger 14) angelenkt sind, der starr mit dem Spoilerelement (12) verbunden ist, und eine Antriebslenkereinheit (32) umfasst, die aus zwei über ein Gelenk (38) miteinander verbundenen Teillenkern (34,40) besteht, von denen einer an dem Spoilerelementträger (14) oder einen der Führungslenker (20, 22) und der andere an der Basis (18) angelenkt ist und mit einer Antriebseinrichtung verbunden ist. Die Lenkereinheit umfasst mindestens eine Toleranzausgleichseinrichtung, die zumindest in der eingefahrenen Ruhestellung des Spoilerelements (12) hinsichtlich Hub- und/oder Winkelstellung des Spoilerelements (12) gegenüber der Basis wirksam ist.

## Beschreibung

Die Erfindung betrifft eine Luftleiteinrichtung für ein Fahrzeug nach dem Oberbegriff des Patentanspruchs 1.

Eine derartige Luftleiteinrichtung ist aus der EP 1 601 568 B1 bekannt und umfasst ein Spoilerelement, das über eine Lenkereinheit zwischen einer mit der Fahrzeugaußenhaut fluchtenden Ruhestellung und einer ausgestellten Betriebsstellung verstellbar ist. Die Betätigungsmechanik umfasst eine Lenkereinheit, die Führungslenker aufweist, die eine verschwenkbare Viergelenkeinheit bilden und jeweils mit einem Ende an einer karosseriefesten Basis und mit ihrem anderen Ende an einem Träger für das Spoilerelement angelenkt sind. Des Weiteren umfasst die Lenkereinheit einen Antriebslenkereinheit, die in zwei gelenkig miteinander verbundene Teillenker unterteilt ist und die einerseits an einem der Lenker der Viergelenkeinheit und andererseits mit einer Antriebseinrichtung verbunden ist. In der ausgestellten Betriebsstellung wird das die beiden Teillenker verbindende Gelenk gegen einen Anschlag gefahren, in dem sich dieses Gelenk in einer so genannten Übertotpunkt-Stellung befindet, so dass ein ungewolltes Verstellen des Spoilerelements im Wesentlichen ausgeschlossen ist. Ein Verriegeln in einer Übertotpunkt-Lage erfordert aber eine hohe Fertigungsgenauigkeit der Betätigungskinematik, so dass auch Toleranzprobleme resultieren.

Der Erfindung liegt die Aufgabe zugrunde, eine Luftleiteinrichtung der einleitend genannten Art mit einer erhöhten Betriebssicherheit zu schaffen.

Diese Aufgabe ist erfindungsgemäß durch die Luftleiteinrichtung mit den Merkmalen des Patentanspruchs 1 gelöst.

Der Kern der Erfindung besteht mithin darin, dass die Lenkereinheit der Betätigungsmechanik mit mindestens einer Toleranzausgleichseinrichtung versehen ist, die insbesondere Fertigungstoleranzen kompensiert. Auch können durch die Toleranzausgleichseinrichtung Verunreinigungen, die im Bewegungsweg des Spoilerelements auftreten, kompensiert werden. Die Kompensation kann hinsichtlich des Hubs und/oder der Winkelstellung des Spoilerelements erfolgen. Durch die Toleranzausgleichseinrichtung im Bereich der Lenkereinheit hat die Luftleiteinrichtung nach der Erfindung eine hohe Betriebssicherheit, da ein Verklemmen der Lenkereinheit aufgrund von Herstellungstoleranzen und/oder Verunreinigungen im Bewegungsweg ausgeglichen werden können. Die Lenker der Lenkereinheit können trotzdem bis zu ihrer die Ruhestellung des Spoilerelements definierenden Stellung verschwenkt werden.

Bei einer bevorzugten Ausführungsform der Luftleiteinrichtung nach der Erfindung ist einer der Teillenker der Antriebslenkereinheit zur Ausbildung der Toleranzausgleichseinrichtung hinsichtlich seiner Länge elastisch dehnbar bzw. längbar ausgebildet. Damit ist es möglich, eine zur Durchführung des Hubs des Spoilerelements erforderliche Längung eines Teillenkers der Antriebslenkereinheit im Bedarfsfall zu realisieren. Insbesondere ist durch die Längbarkeit des Teillenkers bei einer Zugbelastung ein Längenausgleich möglich. Bei einer Druckbelastung bleibt der Teillenker hingegen vorzugsweise steif, das heißt er behält die Länge bei, die er auch im unbelasteten Zustand hat.

Die Toleranzausgleichsmaßnahmen im Sinne der Erfindung wirken also im Wesentlichen nur bei der eingefahrenen Ruhestellung, da dann eine möglichst exakte Lage des Spoilerelements gegenüber der Fahrzeugaußenhaut gefordert wird. In der eingefahrenen Stellung wird die exakte Lage des Spoilerelements gewöhnlich über feste oder einstellbare elastische Anschläge definiert. Die Anschläge sollen in allen Fahrzuständen vorgespannt sein, um Geräuschentwicklungen und unerwünschte Relativbewegungen zwischen dem Spoilerelement und der Fahrzeugaußenhaut zu vermeiden. Wenn sich kein Element in der Antriebslenkereinheit befindet, das einen Längenausgleich ermöglicht, liegt je nach Toleranzsituation entweder keine Vorspannung zur Fahrzeugaußenhaut oder ein Überdrücken der elastischen Anschläge vor, so dass sich keine akute Position des Spoilerelements gegenüber der Fahrzeugaußenhaut ergibt. In der ausgefahrenen Betriebsstellung soll das System hingegen möglichst steif sein, um aerodynamische Lasten aufnehmen zu können.

Bei einer speziellen Ausführungsform der Luftleiteinrichtung nach der Erfindung umfasst der elastisch dehnbare Teillenker einen Federschenkel und einen aus zwei Schenkelelementen bestehenden Dehnschenkel. Der Federschenkel, der sich insbesondere bogenförmig entlang dem Dehnschenkel erstreckt und von diesem durch eine beispielsweise sichelförmige Ausnehmung getrennt ist, bildet das Rückstellelement, das den Teillenker in seine ursprüngliche Form zurückstellt, wenn keine Kraft auf den Teillenker wirkt. Bei einer Belastung, insbesondere bei einer Zugbelastung führen die beiden Schenkelelemente des Dehnschenkels eine Relativbewegung zueinander aus.

Der Dehnschenkel kann insbesondere aus zwei ineinander greifenden Hakenelementen gebildet sein, die eine Längung des Dehnschenkels begrenzen und die bei einer maximalen Längung des Dehnschenkels aneinander anliegen. Die maximale Längung des Dehnschenkels und damit des betreffenden Teillenkers der Antriebslenkereinheit kann durch diese Ausführungsform wirkungsvoll begrenzt werden, wodurch eine Überdehnung und insbesondere eine plastische Deformation der Antriebslenkereinheit im Wesentlichen ausgeschlossen werden kann.

Zur Verhinderung einer Stauchung des längbaren Teillenkers der Antriebslenkereinheit, stützen sich die zwei Schenkelemente des Dehnschenkels bei einer bevorzugten Ausführungsform in dessen ungedehnten Zustand aneinander ab. Der Antriebslenker bleibt damit bei einer Druckbelastung steif, das heißt er behält seine Länge bei.

Um auch hinsichtlich der Winkelstellung des Spoilerelements in der eingefahrenen Ruhestellung Toleranzen ausgleichen zu können, ist bei der Luftleiteinrichtung nach der Erfindung vorzugsweise mindestens einer der Führungslenker zur Ausbildung der Toleranzausgleichseinrichtung zumindest einseitig über ein Langloch gelagert, in das ein Lagerbolzen eingreift.

Um in der ausgestellten Betriebsstellung Schwingungen des Spoilerelements möglichst klein halten zu können, liegt der über das Langloch gelagerte Lenker in der ausgestellten Betriebsstellung vorzugsweise an einem Anschlag an, der ein Verschieben des Langlochs gegenüber dem Lagerbolzen verhindert. Die Ausrichtung des Langlochs gegenüber dem Anschlag ist vorzugsweise so gewählt, dass das Spoilerelement in seiner ausgestellten Betriebsstellung eine eindeutige Lage einnimmt.

Um einen möglichst geräuscharmen und gleichmäßigen Bewegungsablauf der Lenkereinheit zu ermöglichen, ist bei einer vorteilhaften Ausführungsform der Luftleiteinrichtung nach der Erfindung eine Stirnseite des über ein Langloch gelagerten Führungslenkers als Anfahrrampe für den Anschlag ausgebildet.

Um die Lage des Anschlags gegenüber dem Führungslenker eindeutig zu definieren, kann an der Stirnseite des über das Langloch gelagerten Führungslenkers ein Absatz oder eine Ausnehmung ausgebildet sein, auf den der Anschlag in der ausgestellten Betriebsstellung des Spoilerelements auffährt bzw. in die der Anschlag in der ausgestellten Betriebsstellung des Spoilerelements einfährt und die vorzugsweise zusammen mit dem Anschlag einen Endanschlag für die Lenkereinheit für die ausgefahrene Betriebsstellung des Spoilerelements bildet.

Bei einer alternativen Ausführungsform der Luftleiteinrichtung nach der Erfindung stützen sich die beiden Führungslenker zur Bildung eines Endanschlags für die Lenkereinheit in der ausgestellten Betriebsstellung aneinander ab.

Um sowohl die ausgefahrene Betriebsstellung als auch die eingefahrene Ruhestellung zu sichern, das heißt um in diesen Stellungen keine unerwünschten Bewegungen des Spoilerelements durchführen zu können, nimmt das die beiden Teillenker der Antriebslenkereinheit verbindende Gelenk in der ausgestellten Betriebsstellung und in der eingefahrenen Ruhestellung vorzugsweise jeweils eine Übertotpunkt-Lage ein. Die Luftleiteinrichtung nach der Erfindung ist dann also zweifach verriegelnd.

Durch die Übertotpunkt-Lage des die beiden Teillenker der Antriebslenkereinheit verbindenden Gelenks wird der Luftleiteinrichtung in seinen beiden Endstellungen verriegelt. Damit zeichnen sich beide Endstellungen durch eine hohe Steifigkeit aus. Trotz der Übertotpunkt-Stellung in der Betriebsstellung und in der Ruhestellung des Spoilerelements können die Toleranzanforderungen aufgrund der Toleranzausgleichseinrichtung erfüllt werden. Durch die Gestaltung der Bauteile der Betätigungsmechanik wird nur eine geringe Anzahl an Bauteilen benötigt. Insbesondere ist zur Ausbildung der als Antriebszweischlag aufzufassenden Antriebslenkereinheit gegenüber dem Stand der Technik kein zusätzliches Bauteil erforderlich. Lediglich ein Teillenker des Antriebszweischlags wird, wie oben beschrieben, vorzugsweise in Form eines elastisch dehnbaren Lenkers ausgebildet.

Die Luftleiteinrichtung nach der Erfindung kann insbesondere als so genannter Heckspoiler ausgebildet sein, der heckseitig eines Fahrzeugheckfensters in eine Fahrzeugkarosserie integriert ist. Insbesondere in diesem Fall umfasst die Luftleiteinrichtung zwei bezogen auf eine vertikale Fahrzeuglängsmittelebene im Wesentlichen symmetrisch ausgebildete Lenkereinheiten der vorstehend beschriebenen Art, die vorzugsweise mittels einer gemeinsamen Antriebseinrichtung betätigt werden können.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Luftleiteinrichtung nach der Erfindung sind in der Zeichnung schematisch vereinfacht dargestellt und werden in der nachfolgenden Beschreibung näher erläutert. Es zeigt:
- Fig. 1: eine perspektivische Seitenansicht einer Betätigungsmechanik eines Kraftfahrzeugheckspoilers im ausgestellten Zustand;
- Fig. 2: eine vergrößerte Ansicht eines Antriebslenkers der Betätigungsmechanik;
- Fig. 3: eine zweite Seitenansicht der Betätigungsmechanik;
- Fig. 4: eine erste Seitenansicht der Betätigungsmechanik im abgesenkten Zustand des Heckspoilers;
- Fig. 5: eine zweite Seitenansicht der Betätigungsmechanik im abgesenkten Zustand des Heckspoilers;
- Fig. 6: eine Seitenansicht einer Betätigungsmechanik einer zweiten Ausführungsform einer Luftleiteinrichtung nach der Erfindung im abgesenkten Zustand;
- Fig. 7: die Betätigungsmechanik nach Fig. 6 in der ausgefahrenen Stellung der Luftleiteinrichtung;
- Fig. 8: eine Seitenansicht einer weiteren Ausführungsform einer Betätigungsmechanik einer Luftleiteinrichtung nach der Erfindung im abgesenkten Zustand;
- Fig. 9: die Betätigungsmechanik nach Fig. 8 im ausgestellten Zustand der Luftleiteinrichtung;
- Fig. 10: eine vergrößerte Ansicht des Bereichs X in Fig. 9;
- Fig. 11: eine Seitenansicht einer weiteren Ausführungsform einer Betätigungsmechanik einer Luftleiteinrichtung nach der Erfindung im eingefahrenen Zustand;
- Fig. 12: eine Fig. 11 entsprechende Ansicht, jedoch im ausgestellten Zustand der Luftleiteinrichtung; und
- Fig. 13: eine vergrößerte Ansicht des Bereichs XIII in Fig. 12.

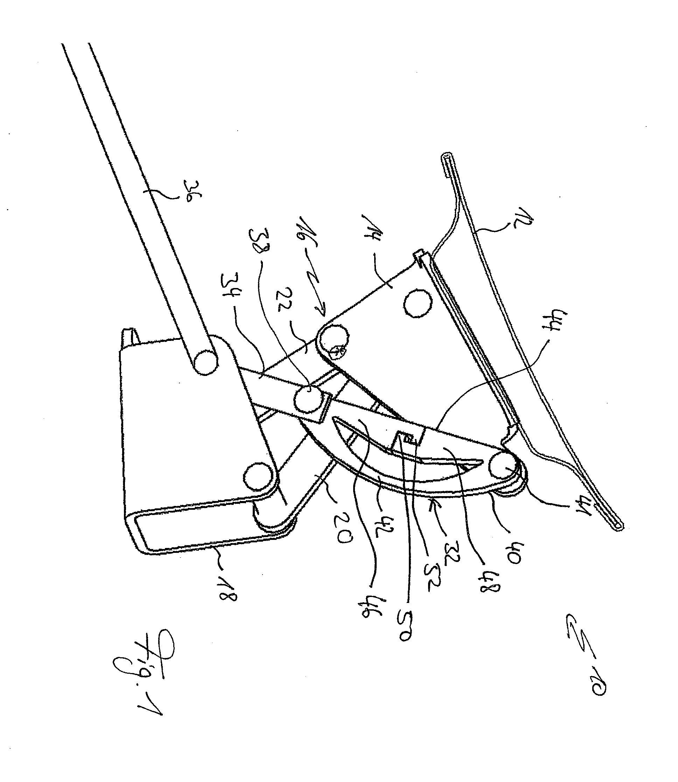

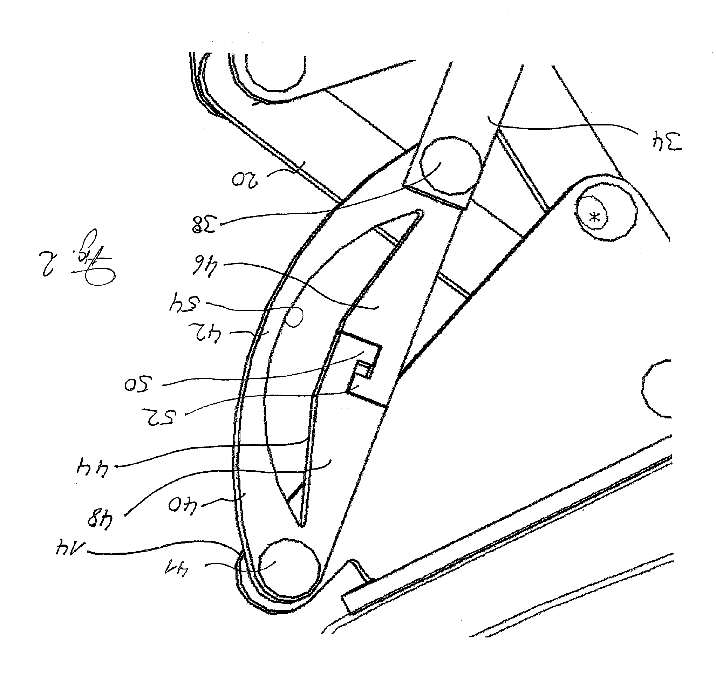

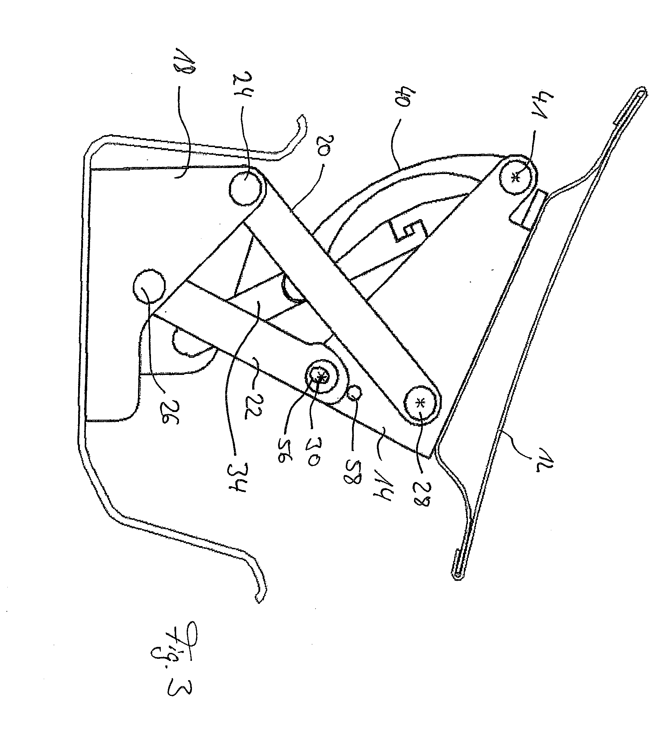

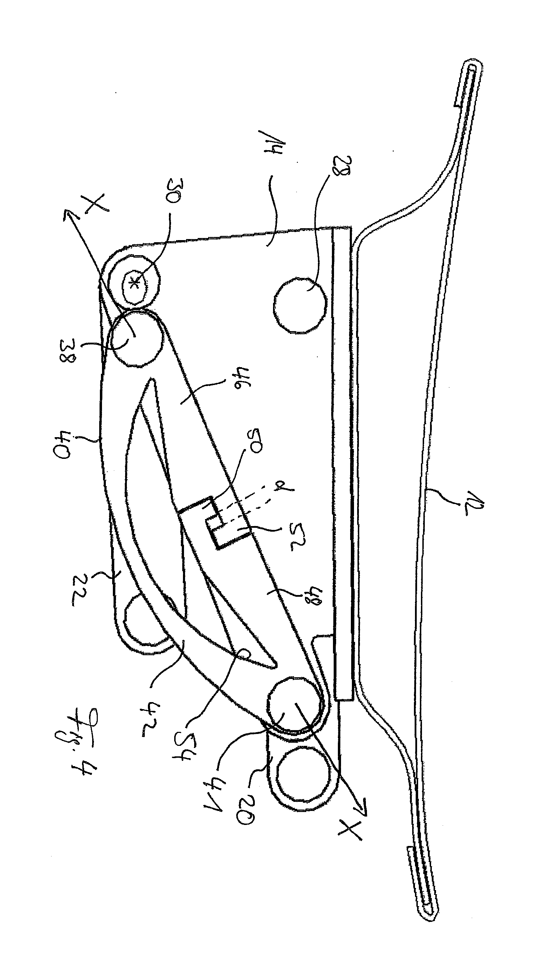

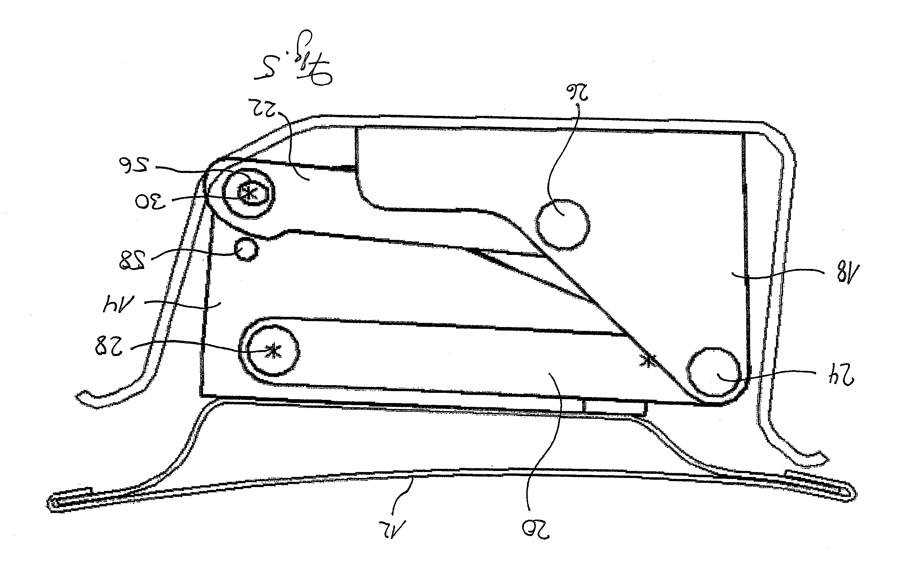

In den Figuren 1 bis 5 ist eine Luftleiteinrichtung 10 dargestellt, die unterhalb einer Heckscheibe eines nicht näher dargestellten Kraftfahrzeuges angeordnet ist und mithin einen so genannten Heckspoiler darstellt. Die Luftleiteinrichtung 10 ist zwischen einer in den Figuren 1 bis 3 dargestellten, ausgefahrenen Betriebsstellung und einer in den Figuren 4 und 5 dargestellten, in einer Karosseriemulde aufgenommenen Ruhestellung verstellbar.

Die Luftleiteinrichtung 10, die sich in Fahrzeugquerrichtung erstreckt, weist ein Spoilerelement 12 auf, das bezogen auf eine vertikale Fahrzeuglängsmittelebene beidseits über einen Spoilerelementträger 14 mit einer Betätigungsmechanik 16 verbunden ist, mittels der die Ausstell- und die Einfahrbewegung realisiert werden kann.

Die Betätigungsmechanik 16 umfasst eine Basis 18, die als im Querschnitt U-förmiges Blechbauteil ausgebildet ist und karosseriefest, das heißt starr an den Fahrzeugaufbau angebunden ist. An der Basis 18 ist eine Lenkereinheit angebunden, die zwei, eine Viergelenkeinheit bildende Führungslenker 20 und 22 umfasst, die jeweils an einem Ende über einen Lagerzapfen 24 bzw. 26 an der Basis 18 angelenkt sind und an ihrem jeweiligen anderen Ende über einen Lagerzapfen 28 bzw. 30 an dem Spoilerelementträger 14 angelenkt sind. Die aus den Führungslenkern 20 und 22 gebildete Viergelenkeinheit gibt die Bewegungsbahn des Spoilerelements 12 bei dessen Verstellbewegung vor.

Zum Antrieb der Betätigungsmechanik 16 weist die Lenkereinheit eine Antriebslenkereinheit 32 auf, die als Antriebszweischlag bzw. als Kniehebel ausgebildet ist und einen ersten Teillenker 34 aufweist, der einerseits an der Basis 18 angelenkt und mit einer rotatorisch angetriebenen Antriebswelle 36 verbunden ist und andererseits über ein Gelenk 38 mit einem zweiten Teillenker 40 des Antriebslenkers 32 verbunden ist. Der Teillenker 40 ist über einen Lagerbolzen 41 an dem Spoilerelementträger 14 angelenkt. Eine mittels einer nicht näher dargestellten Antriebseinrichtung ausgeübte Rotation der Antriebswelle 36 führt zu einem Verschwenken des Teillenkers 34, so dass über den Teillenker 40 eine Hubbewegung in das Spoilerelement 12 eingetragen wird.

Der Teillenker 40 der Antriebslenkereinheit 32 ist elastisch dehnbar bzw. längbar ausgebildet und umfasst zwei Schenkel 42 und 44, von denen der Schenkel 42 als so genannter Federschenkel ausgebildet ist und der Schenkel 44 einen Dehnschenkel darstellt, der eine Längung des Teillenkers 40 ermöglicht und der aus zwei Schenkelelementen 46 und 48 gebildet ist, die jeweils ein Hakenelement darstellen und die mit ihren hakenförmigen, im mittleren Bereich des Dehnschenkels 44 angeordneten Abschnitten 50 und 52 ineinander greifen. Die beiden Schenkelelemente 46 und 48 greifen derart ineinander, dass sie sich über ihre Stirnseiten im ungelängten Zustand des Teillenkers 40 aneinander abstützen. Bei einer Längung des Teillenkers 40 werden die beiden Schenkelelemente 46 und 48 auseinander gezogen, wobei die stirnseitigen Hakenabschnitte 50 und 52 der Schenkelelemente 46 und 48 Anschläge bilden, die die maximale Längung des Teillenkers 40 begrenzen und hierzu aufeinander auffahren.

Eine Längung des Teillenkers 40 kann insbesondere im eingefahrenen, abgesenkten Zustand des Spoilerelements 12 erfolgen, wenn gemäß den Pfeilen X in Fig. 4 eine Zugkraft auf den Teillenker 40 ausgeübt wird. Eine Zugkraft wird beispielsweise eingeleitet, wenn beim Ablegen des Spoilerelements 12 Toleranzen hinsichtlich der Bauteilabmessungen überwunden werden müssen oder wenn sich Verunreinigungen an einer Ablagefläche für das Spoilerelement 12 abgelagert haben, so dass ein passgenaues Ablegen des Spoilerelements 12 zumindest vorübergehend verhindert wird. Der Federschenkel 42, der sich bogenförmig entlang dem Federschenkel 42 erstreckt und von diesem über einen sichelförmigen Ausschnitt 54 getrennt ist, leitet hierbei eine Rückstellkraft in den Dehnschenkel 44 ein und bewirkt nach einem Lösen der oben genannten Verunreinigungen oder bei einem nachfolgenden Ausstellen des Spoilerelements 12, dass die beiden Schenkelelemente 46 und 48 des Dehnschenkels 44 mit ihren Stirnseiten wieder gegeneinander gefahren werden.

Der Teillenker 40 ist also als Ausgleichselement gestaltet, das einen Längenausgleich bei einer Zugbelastung X zulässt. Bei einer Druckbelastung, die entgegen der durch die Pfeile X vorgegebenen Richtung erfolgt, bleibt der Teillenker 40 jedoch steif. Die maximale Längung des Teillenkers 40 ist durch einen Abstand d zwischen den Hakenabschnitten 50 und 52 der Schenkelelemente 46 und 48 im unbelasteten Zustand des Teillenkers 40 vorgegeben.

Um auch einen Toleranzausgleich für die Winkelstellung des Systems bei eingefahrenem Spoilerelement 12 bereitzustellen, ist der Führungslenker 22 an dem Spoilerelementträger 14 bzw. an dem Lagerzapfen 30 über ein Langloch 56 gelagert. Damit kann sich der Führungslenker 22 in der eingefahrenen Stellung des Spoilerelements 12 relativ zu dem Spoilerelementträger 14 bewegen, wodurch ein Winkelausgleich möglich ist.

In einer ausgefahrenen Stellung des Spoilerelements 12 ist eine Bewegung des Führungslenkers 22 gegenüber dem Spoilerelementträger 14 dadurch blockiert, dass eine Stirnseite des Führungslenkers 22 an einem Anschlag 58 anliegt, der von einem Zapfen gebildet ist, welcher in Fahrzeugquerrichtung von dem Spoilerelementträger 14 vorsteht. Die Ausrichtung des Langlochs 56, das heißt die Achse des Langlochs 56 ist so gewählt, dass das Spoilerelement 12 in seiner ausgefahrenen Stellung eine eindeutige Position gegenüber dem Fahrzeugaufbau einnimmt. In der eingefahrenen, beispielsweise in Fig. 5 dargestellten Stellung des Spoilerelements 12 liegt der Anschlag 58 bezogen auf die Achse des Führungslenkers 22 seitlich neben dem Führungslenker 22.

Die Stirnseite des Führungslenkers 22 ist als Anfahrrampe für den Anschlag 58 ausgebildet, so dass der von dem Anschlag 58 auf den Führungslenker 22 ausgeübte Druck ausgehend von der eingefahrenen Ruhestellung des Spoilerelements 12 mit zunehmendem Verschwenken des Führungslenkers 22 zunimmt, und in dieser ausgestellten Endstellung ein Versatz gegenüber dem Spoilerelementträger 14 blockiert ist.

Der Antriebslenker 32, der ein Antriebszweischlag ist, ist so ausgebildet, dass das Gelenk 38 zwischen den Teillenker 34 und 40 in den Endstellungen, das heißt in der eingefahrenen Ruhestellung und in der ausgefahrenen Betriebsstellung des Spoilerelements 12 jeweils eine Übertotpunkt-Lage einnimmt, so dass ein ungewünschtes Verstellen des Spoilerelements 12 beispielsweise durch Ausüben eines Drucks auf das Spoilerelement 12 gesperrt ist. Vielmehr kann ein Verstellen des Spoilerelements 12 nur durch ein Betätigen der Antriebswelle 36 erfolgen, die ein Drehmoment auf den Teillenker 34 des Antriebslenkers 32 ausübt und so das Gelenk 38 aus der jeweiligen Übertotpunkt-Lage schwenkt.

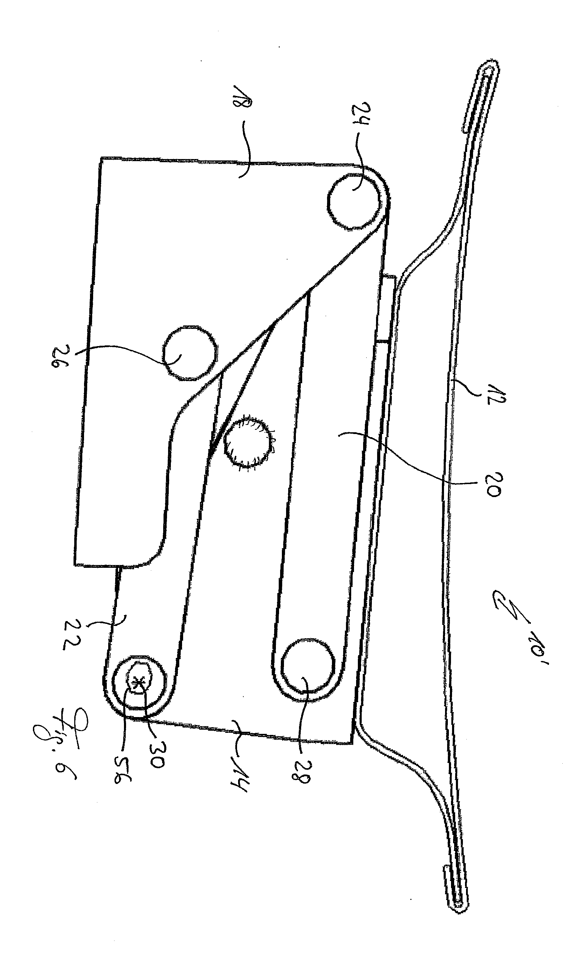

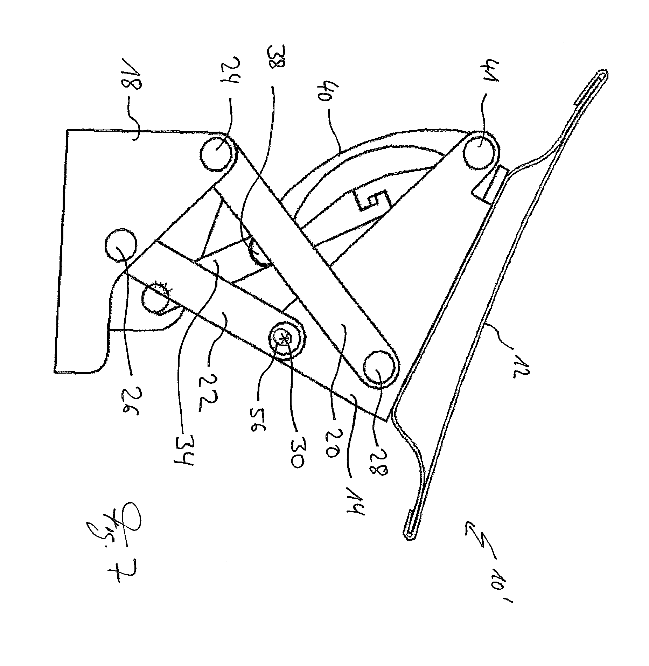

In den Figuren 6 und 7 ist eine weitere Ausführungsform in der Luftleiteinrichtung 10' dargestellt, die im Wesentlichen derjenigen nach den Figuren 1 bis 5 entspricht, sich von dieser aber dadurch unterscheidet, dass der Führungslenker 22 in der ausgefahrenen, ausgestellten Stellung des Spoilerelements 12 nicht an einem Anschlag anliegt. Vielmehr kann bei dieser Ausführungsform auch in der ausgefahrenen Betriebsstellung des Spoilerelements 12 einen Relativbewegung zwischen dem Führungslenker 22 und dem Spoilerelementträger 14 erfolgen.

Im Übrigen entspricht die Luftleiteinrichtung 10' derjenigen nach den Figuren 1 bis 5.

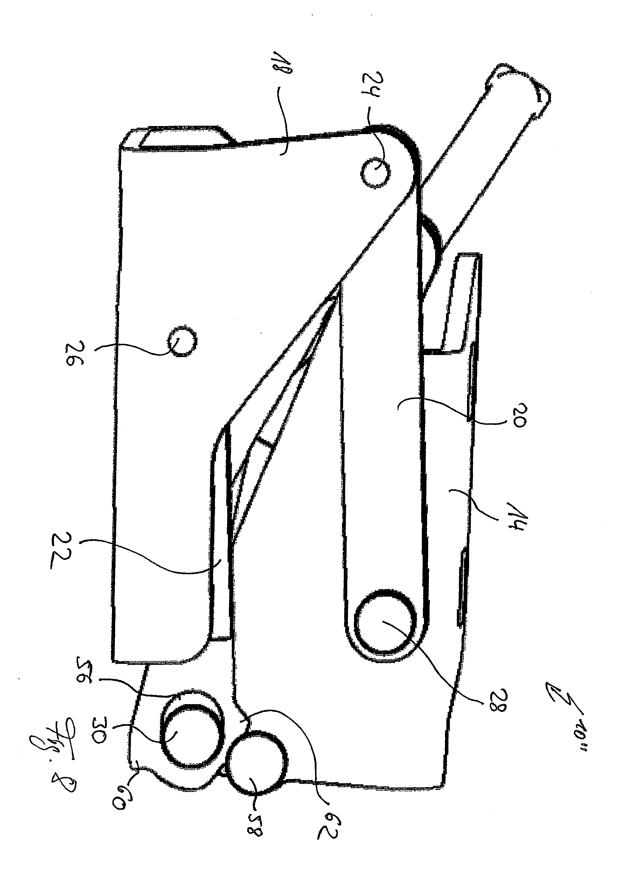

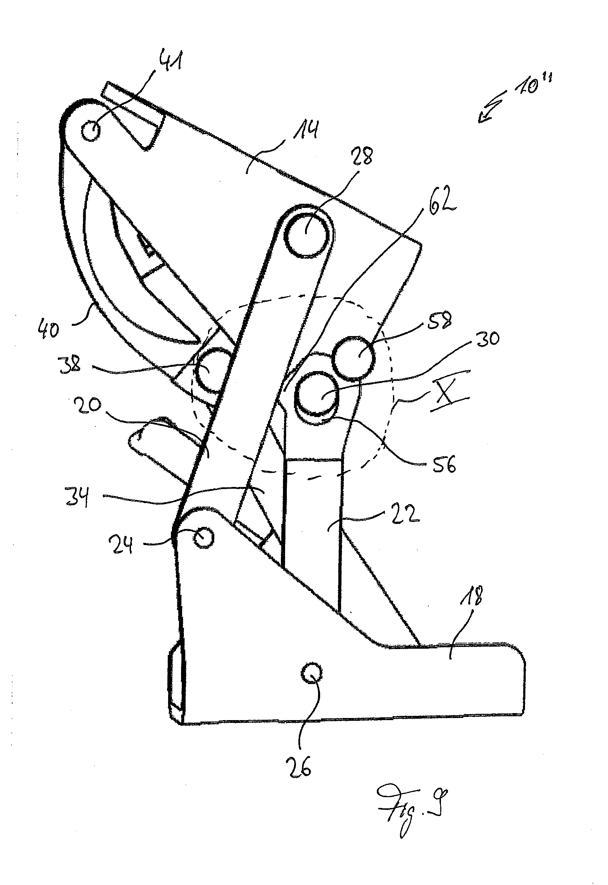

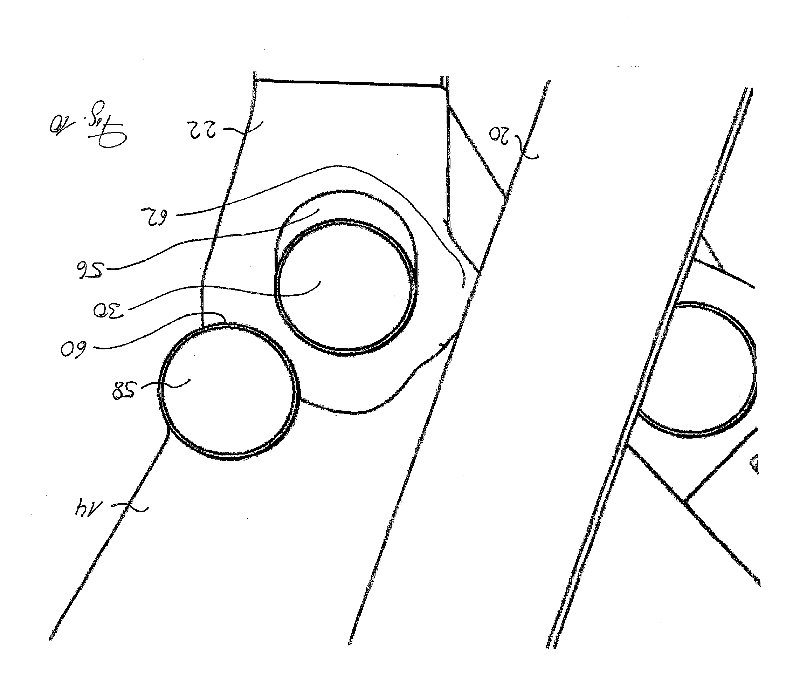

In den Figuren 8 bis 10 ist eine weitere Ausführungsform einer Luftleiteinrichtung 10" dargestellt, die wiederum im Wesentlichen derjenigen nach den Figuren 1 bis 5 entspricht, sich von dieser aber dadurch unterscheidet, dass ein Anschlag 58 für den Führungslenker 22 beim Verschwenken des Führungslenkers 22 an einer Stirnseite des Führungslenkers 22 gleitet und in der maximal ausgestellten Betriebsstellung des Spoilerelements 12 an einem eine Ausnehmung bildenden Absatz 60 an der Stirnseite des Führungslenkers 22 anliegt, der bezüglich der Achse des Führungslenkers 22 seitlich versetzt ist. Des Weiteren weist der Führungslenker 22 einen seitlichen Vorsprung 62 auf, der, wie Fig. 9 zu entnehmen ist, in der ausgestellten Betriebsstellung des Spoilerelements 12 sich an dem zweiten Führungslenker 20 abstützt, so dass ein Endanschlag durch das Zusammenwirken der beiden Führungslenker 20 und 22 bestimmt wird.

Im Übrigen entspricht die Luftleiteinrichtung 10" derjenigen nach den Figuren 1 bis 5.

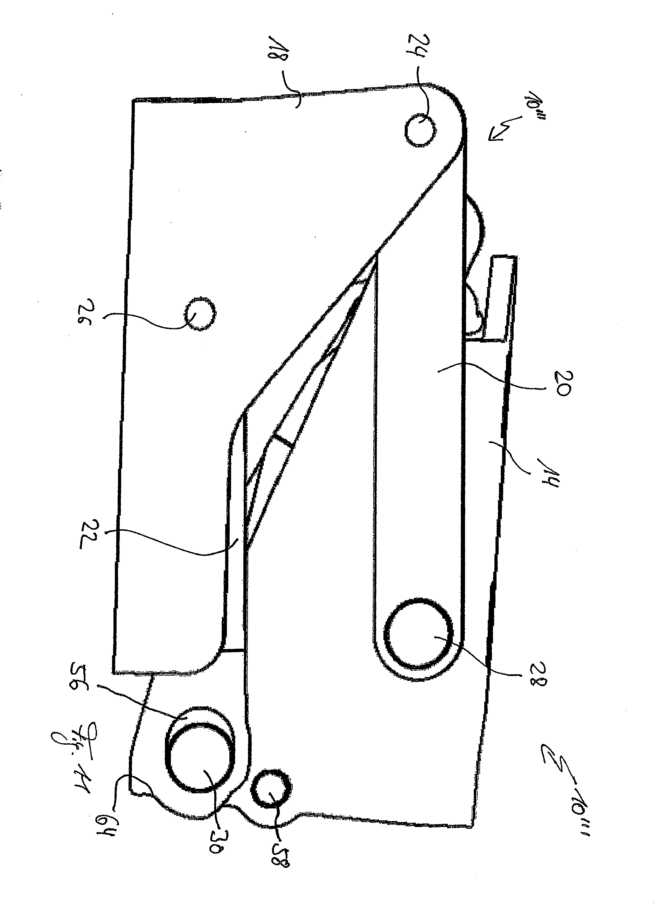

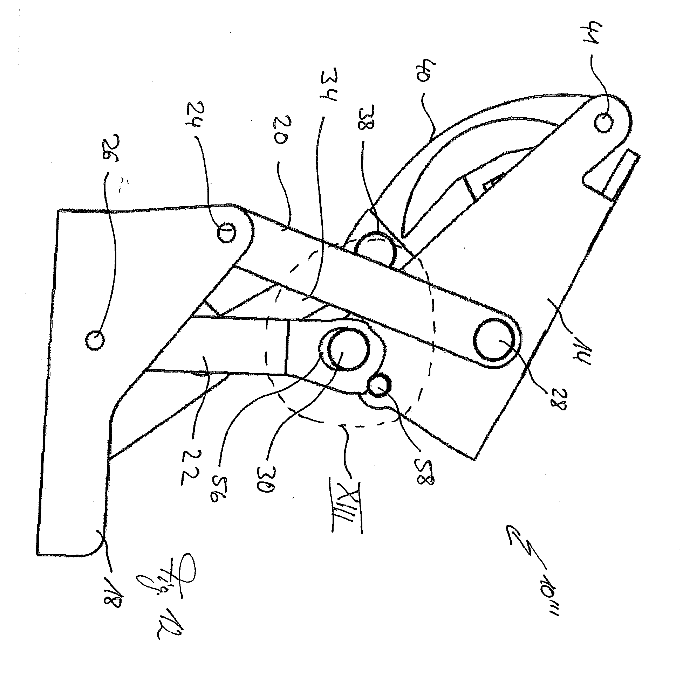

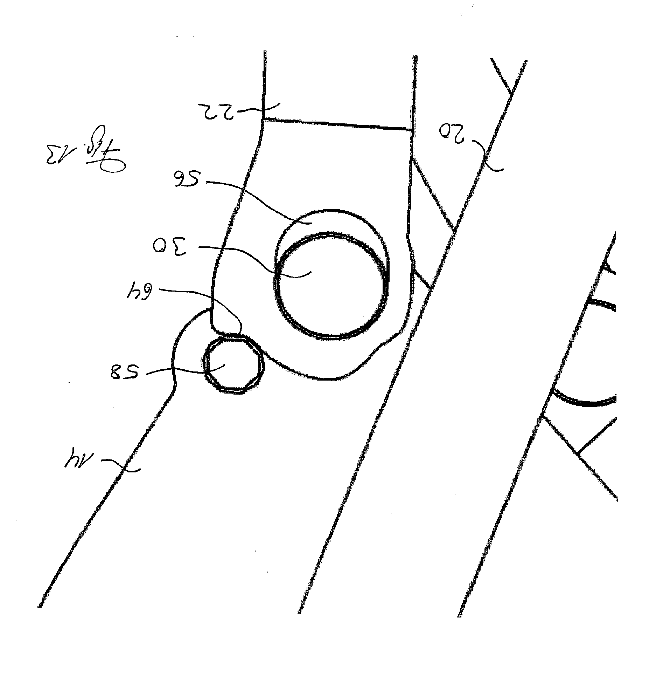

In den Figuren 11 bis 13 ist eine weitere Ausführungsform der Luftleiteinrichtung 10"' dargestellt, die wiederum im Wesentlichen derjenigen nach den Figuren 1 bis 5 entspricht, sich von dieser aber dadurch unterscheidet, dass der Anschlag 58, der als Zapfen an dem Spoilerelementträger 14 ausgebildet ist, sowohl als Sperreinrichtung für die Relativbewegung zwischen dem Führungslenker 22 und dem Spoilerelementträger 14 in der ausgestellten Betriebsstellung des Spoilerelements dient als auch einen Endanschlag darstellt, der die Ausstellbewegung des Spoilerelements 12 dadurch begrenzt, dass er in eine an der Stirnseite des Führungslenkers 22 ausgebildeten Ausnehmung 64 des Führungslenkers 22 eingreift und so ein Weiterverschwenken des Führungslenkers 22 sperrt. Diese Anordnung des Anschlags 58 ist den Figuren 12 und 13 zu entnehmen.

Im übrigen entspricht die Luftleiteinrichtung 10"' ebenfalls derjenigen nach den Figuren 1 bis 5.

### Bezugszeichenliste

- 10: Luftleiteinrichtung
- 12: Spoilerelement
- 14: Spoilerelementträger
- 16: Betätigungsmechanik
- 18: Basis
- 20: Führungslenker
- 22: Führungslenker
- 24: Lagerzapfen
- 26: Lagerzapfen
- 28: Lagerzapfen
- 30: Lagerzapfen
- 32: Antriebslenkereinheit
- 34: Teillenker
- 36: Antriebswelle
- 38: Gelenk
- 40: Teillenker
- 41: Lagerbolzen
- 42: Federschenkel
- 44: Dehnschenkel
- 46: Schenkelelement
- 48: Schenkelelement
- 50: Hakenabschnitt
- 52: Hakenabschnitt
- 54: Ausschnitt
- 56: Langloch
- 58: Anschlag
- 60: Absatz
- 62: Vorsprung
- 64: Ausnehmung

## Patentansprüche

1. Luftleiteinrichtung für ein Fahrzeug, umfassend mindestens ein Spoilerelement (12), das mittels einer Betätigungsmechanik (16) zwischen einer eingefahrenen Ruhestellung und einer ausgestellten Betriebsstellung verstellbar ist, wobei die Betätigungsmechanik (16) eine Lenkereinheit aufweist, die mindestens zwei Führungslenker (20, 22), die eine verschwenkbare Mehrgelenkeinheit bilden und jeweils einerseits an einer Basis (18) und andererseits an einem Spoilerelementträger (14) angelenkt sind, der starr mit dem Spoilerelement (12) verbunden ist, und eine Antriebslenkereinheit (32) umfasst, die aus zwei über ein Gelenk (38) miteinander verbundenen Teillenkern (34, 40) besteht, von denen einer an dem Spoilerelementträger (14) oder einem der Führungslenker (20, 22) und der andere an der Basis (18) angelenkt ist und mit einer Antriebseinrichtung verbunden ist, **dadurch gekennzeichnet, dass** die Lenkereinheit mindestens eine Toleranzausgleichseinrichtung umfasst, die zumindest in der eingefahrenen Ruhestellung des Spoilerelements (12) hinsichtlich Hub und/oder Winkelstellung des Spoilerelements (12) gegenüber der Basis wirksam ist.

2. Luftleiteinrichtung nach Anspruch 1, **dadurch gekennzeichnet, dass** einer der Teillenker (40) der Antriebslenkereinheit (32) zur Ausbildung der Toleranzausgleichseinrichtung hinsichtlich seiner Länge elastisch längbar ausgebildet ist.

3. Luftleiteinrichtung nach Anspruch 2, **dadurch gekennzeichnet, dass** der elastisch längbare Teillenker (40) einen Federschenkel (42) und einen aus zwei Schenkelelementen (46, 48) gebildeten Dehnschenkel (44) umfasst.

4. Luftleiteinrichtung nach Anspruch 3, **dadurch gekennzeichnet, dass** der Dehnschenkel (44) zwei ineinander greifende Hakenabschnitte (50, 52) umfasst, die eine Längung des Dehnschenkels (44) begrenzen und die bei einer maximalen Längung des Dehnschenkels (44) aneinander anliegen.

5. Luftleiteinrichtung nach Anspruch 3 oder 4, **dadurch gekennzeichnet, dass** sich die zwei Schenkelelemente (46, 48) des Dehnschenkels (44) in dessen ungedehntem Zustand aneinander abstützen.

6. Luftleiteinrichtung nach einem der Ansprüche 1 bis 5, **dadurch gekennzeichnet, dass** mindestens einer der Führungslenker (22) zur Ausbildung der Toleranzausgleichseinrichtung zumindest einseitig über ein Langloch (56) gelagert ist, in das ein Lagerbolzen (30) eingreift.

7. Luftleiteinrichtung nach Anspruch 6, **dadurch gekennzeichnet, dass** in der ausgestellten Betriebsstellung der über das Langloch (56) gelagerte Führungslenker (22) an einem Anschlag (58) anliegt, der ein Verschieben des Langlochs (56) gegenüber dem Lagerbolzen (30) verhindert.

8. Luftleiteinrichtung nach Anspruch 6 oder 7, **dadurch gekennzeichnet, dass** eine Stirnseite des über das Langloch (56) gelagerten Führungslenkers (22) als Anfahrrampe für den Anschlag (58) ausgebildet ist.

9. Luftleiteinrichtung nach einem der Ansprüche 6 bis 8, **dadurch gekennzeichnet, dass** an einer Stirnseite des über das Langloch (56) gelagerten Führungslenkers (22) eine Ausnehmung oder ein Absatz (60) ausgebildet ist, in der bzw. auf dem der Anschlag (58) in der ausgestellten Betriebsstellung des Spoilerelements (12) angeordnet ist und die vorzugsweise zusammen mit dem Anschlag (58) einen Endanschlag für die Lenkereinheit bildet.

10. Luftleiteinrichtung nach einem der Ansprüche 6 bis 9, **dadurch gekennzeichnet, dass** sich die beiden Führungslenker (20, 22) zur Bildung eines Endanschlags in der ausgestellten Betriebsstellung aneinander abstützen.

11. Luftleiteinrichtung nach einem der Ansprüche 1 bis 10, **dadurch gekennzeichnet, dass** das die beiden Teillenker (34, 40) verbindende Gelenk (38) der Antriebslenkereinheit (32) in der ausgestellten Betriebsstellung und in der eingefahrenen Ruhestellung jeweils eine Übertotpunkt-Stellung einnimmt.
